# EUROPEAN PATENT APPLICATION

(11) **EP 4 510 205 A1**
(43) Date of publication of application: **19.02.2025**
(21) Application number: 22948285.6
(22) Date of filing: 28.06.2022
(51) Int. Cl.: H01M 4/13, H01M 4/70

(54) **ELECTRODE SHEET, ELECTRODE ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: CHANG, Wen, Ningde, Fujian 352100 (CN); FU, Chenghua, Ningde, Fujian 352100 (CN); YE, Yonghuang, Ningde, Fujian 352100 (CN); GUO, Suogang, Ningde, Fujian 352100 (CN)
(74) Representative: Herrmann, Uwe
(86) International application number: PCT/CN2022/101919
(87) International publication number: WO 2024/000163

(57) **Abstract**

The embodiments of this application provide an electrode plate (311), an electrode assembly (31), a battery cell (3), a battery (2), and an electric device. The electrode plate (311) includes a current collector (36), where the current collector (36) includes a first region (361), a second region (362), and a tab (363) that are arranged sequentially in a first direction (X), the first region (361) is coated with an active substance layer (3611), and the second region (362) is uncoated with the active substance layer (3611); and a protective layer (38), where the protective layer (38) at least partially covers an edge of the second region (362) close to the tab (363) and exceeds the edge of the second region (362) close to the tab (363) in the first direction (X). The technical solution provided by the embodiments of this application can prevent burrs on the current collector from piercing a separator and thus causing a short circuit in the battery, thereby improving the safety performance of the battery.

## Description

### TECHNICAL FIELD

This application relates to the technical field of batteries, and in particular, to an electrode plate, an electrode assembly, a battery cell, a battery, and an electric device.

### BACKGROUND

With increasing environmental pollution, the new energy industry has attracted growing attention. Battery technologies are an important factor related to the development of the new energy industry.

During the development of battery technologies, how the safety performance of batteries is improved is a technical problem to be resolved urgently in the battery technologies.

### SUMMARY

In view of the foregoing problem, the embodiments of this application provide an electrode plate, an electrode assembly, a battery cell, a battery, and an electric device, which can prevent burrs on the current collector from piercing the separator and thus causing a short circuit in the battery, thereby improving the safety performance of the battery.

According to a first aspect, an electrode plate is provided, including a current collector, where the current collector includes a first region, a second region, and a tab that are arranged sequentially in a first direction, the first region is coated with an active substance layer, and the second region is uncoated with the active substance layer; and a protective layer, where the protective layer at least partially covers an edge of the second region close to the tab and exceeds the edge of the second region close to the tab in the first direction.

In the embodiments of this application, the current collector includes the first region coated with an active substance, the second region uncoated with the active substance, and the tab. The protective layer is provided in the second region uncoated with the active substance. Further, the protective layer at least covers the edge of the second region close to the tab and exceeds the edge. As the protective layer is provided to cover and exceed the edge of the second region close to the tab, action can be made on the protective layer when the current collector is processed, thereby avoiding the generation of burrs. Or the burrs on the edge of the current collector are covered directly, avoiding exposure of the burrs, and preventing the burrs from piercing the separator and thus causing a short circuit in the battery, thereby improving the safety performance of the battery.

In a possible implementation, the protective layer covers a partial region of the tab.

In the embodiments of this application, the direction of the burrs in the second region of the current collector is uncertain. To comprehensively avoid exposure of the burrs, the protective layer must exceed the edge of the second region close to the tab. Since the second region and the tab are connected, exceeding the edge of the second region close to the tab means the protective layer certainly covers part of the tab but cannot cover the entire tab. The protective layer is arranged to cover a partial region of the tab, meaning that the protective layer does not cover the entire tab. This ensures the safety performance of the battery and the normal current-carrying capacity and welding capability of the tab, thereby ensuring the normal function of the battery.

In a possible implementation, the protective layer completely covers the second region.

In the embodiments of this application, the protective layer at least covers the edge of the second region close to the tab, meaning that the protective layer can cover part of the second region or the entire second region. The protective layer covering the entire second region can improve the protective effect of avoiding production or exposure of the burrs, further improving the safety performance of the battery.

In a possible implementation, the protective layer adjoins, at a joint with the first region and the second region, the active substance layer.

In the embodiments of this application, the first region and the second region of the current collector are connected. The first region is entirely coated with the active substance layer, and the second region is entirely covered by the protective layer. The protective layer and the active substance layer are enabled to adjoin at the joint between the first region and the second region, ensuring that the protective layer completely covers the second region.

In a possible implementation, the protective layer is a non-porous structure.

In the embodiments of this application, to comprehensively prevent the generation and exposure of burrs, the protective layer completely covers the second region and exceeds the edge of the second region close to the tab. The structure of the protective layer completely covering the second region and exceeding the edge of the second region close to the tab is arranged as a non-porous structure, enhancing the sealing and protective effect of the protective layer.

In a possible implementation, the active substance includes a main body region and a thinned region arranged in the first direction, a thickness of the thinned region is less than a thickness of the main body region, and the protective layer also covers the thinned region.

In the embodiments of this application, during the processing of the electrode plate, the edge of the active substance layer is thinned to produce a thinned region, which can avoid issues of the electrode plate such as a thick edge and a bulging edge. The protective layer covers the thinned region, that is, the protective layer partially overlaps the active substance layer, which can reduce the difficulty of disposing the protective layer during production.

In a possible implementation, in the first direction, the size of the thinned region does not exceed 10 mm.

In the embodiments of this application, to avoid the issues of the electrode plate such as a thick edge and a bulging edge, a thinned region is provided at a side edge of the first region close to the second region, where the active substance layer is thinned. If the region of the thinned region is too long, the energy density of the battery is reduced. The size of the thinned region not exceeding 10 mm can maintain the normal function of the thinned region without reducing the energy density of the battery.

In a possible implementation, the protective layer covering the thinned region is of a micro-porous structure.

In the embodiments of this application, the thinned region is where the active substance is thinned, but still present. The protective layer covering the thinned region is arranged to be of a micro-porous structure, ensuring the normal electrochemical reaction and the migration of metal ions and electrons in the thinned region.

In a possible implementation, a thickness of the protective layer covering the thinned region does not exceed a thickness difference between the main body region and the thinned region.

In the embodiments of this application, the thickness of the protective layer covering the thinned region does not exceed the thickness difference between the main body region and the thinned region, that is, the protective layer covers the thinned region but does not exceed the thinned region. This avoids affecting the volume energy density of the battery.

In a possible implementation, in the first direction, a ratio of a size of the second region not covered by the protective layer to a size of the second region does not exceed 1:6.

In the embodiments of this application, the protective layer at least covers the edge of the second region close to the tab and exceeds this edge, that is, the protective layer partially covers the second region, which can reduce the production cost. However, the ratio of the size of the second region not covered by the protective layer to the size of the second region in the first direction cannot exceed 1:6. If the ratio exceeds 1:6, the exposed current collector faces the active substance of the other electrode plate. If the separator wrinkles, the excessively long exposed current collector may directly come into contact with the other electrode plate, thus causing a short circuit risk. In addition, if the protective layer covers a too small region of the current collector, connection between the protective layer and the current collector is insecure, reducing the protective effect of the protective layer on the current collector.

In a possible implementation, the protective layer also covers the first region.

In the embodiments of this application, the first region is coated with an active substance layer, and the second region is uncoated with the active substance. An edge of the second region close to the tab is covered by the protective layer, and in the first direction, the protective layer exceeds the edge of the second region close to the tab. To further improve the prevention and coverage effects of the protective layer on burrs on the current collector, the protective layer covers the first region, that is, the protective layer is arranged in the first region and the second region of the current collector and exceeds the edge of the second region close to the tab; the active substance layer is applied to the protective layer and overlaps a projection of the first region of the current collector in the thickness direction.

In a possible implementation, the protective layer covering the first region is of a porous structure.

In the embodiments of this application, the protective layer covers the first region and the second region of the current collector, and the active substance layer is applied to the protective layer. The protective layer covering the first region is arranged as a porous structure, such that the connection between the active substance layer and the current collector is not affected, thereby ensuring the normal electrochemical reaction of the battery.

In a possible implementation, the thickness of the protective layer is not greater than the thickness of the active substance layer.

In the embodiments of this application, if the protective layer is too thick, the volume energy density of the battery is reduced. As the thickness of the protective layer is not greater than the thickness of the active substance layer, the protective layer can protect the safety of the battery without reducing the volume energy density of the battery.

In a possible implementation, in the first direction, the size of the second region is 0.5-3 mm.

In the embodiments of this application, in the first direction, if the size of the second region is too large, a too large region of the current collector is occupied, decreasing the energy density of the battery; if the size of the second region is too small, the connection difficulty between the protective layer to the second region is increased. The size of the second region in the first direction is maintained within 0.5-3 mm, reducing the production difficulty without occupying a large region of the active substance.

In a possible implementation, in a second direction, the current collector, the active substance layer, and the protective layer have the same size, and the second direction is perpendicular to the first direction.

In the embodiments of this application, the protective layer at least covers the edge of the second region close to the tab and exceeds this edge in the first direction. In the second direction, as the current collector, the active substance layer, and the protective layer have the same size, the protective layer can completely cover the burrs on the current collector, thereby improving the safety performance of the battery.

In a possible implementation, in a second direction, multiple such current collectors are spaced apart, the protective layer is continuous in the second direction, a size of the protective layer in the second direction is the same as a sum of sizes of the multiple current collectors and sizes of spacings between the multiple current collectors, and the second direction is perpendicular to the first direction.

In the embodiments of this application, when the multiple current collectors are spaced apart to form an electrode plate of the battery, the protective layer is continuous in this electrode plate. In other words, the protective layer covers not only the edges of the second regions of different current collectors close to the tab, but also the spacings between the multiple current collectors. In the second direction, as the size of the protective layer is the same as a sum of sizes of all the current collectors and sizes of spacings between all the current collectors, the protective layer can completely cover the burrs on the current collectors, thereby improving the safety performance of the battery.

In a possible implementation, the active substance layer and the protective layer are disposed on two opposite surfaces of the current collector.

In the embodiments of this application, as the active substance layer and the protective layer are disposed on two opposite surfaces of the current collector, the volume energy density of the battery can be increased.

In a possible implementation, the protective layer and the current collector are connected through adhesion or thermal bonding.

In the embodiments of this application, the protective layer and the current collector are connected through adhesion or thermal bonding, which is a simple connection method and can be widely applied in the production process.

In a possible implementation, a material of the protective layer is polypropylene, polyamide, or epoxy resin.

In the embodiments of this application, the protective layer is made of polypropylene, polyamide, or epoxy resin, ensuring the normal protective effect of the protective layer, reducing the production cost, and facilitating application in large-scale production.

According to a second aspect, an electrode assembly is provided, including the electrode plate in the above embodiments.

According to a third aspect, a battery cell is provided, including the electrode assembly in the above embodiments; a shell provided with an opening and configured to accommodate the electrode assembly; and an end cover configured to close the opening.

According to a fourth aspect, a battery is provided, including the battery cell in the above embodiments.

According to a fifth aspect, an electric device is provided, including the battery in the above embodiments, where the battery is configured to supply electrical energy.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to an embodiment of this application;
FIG. 2 is a schematic structural exploded view of a battery according to an embodiment of this application;
FIG. 3 is a schematic diagram of a battery cell according to an embodiment of this application;
FIG. 4 is a schematic structural diagram of an electrode plate according to an embodiment of this application;
FIG. 5 is a left view of FIG. 4;
FIG. 6 is a schematic structural diagram of an electrode plate according to another embodiment of this application;
FIG. 7 is a left view of FIG. 6;
FIG. 8 is a left view of a schematic structural diagram of an electrode plate according to another embodiment of this application;
FIG. 9 is a schematic structural diagram of an electrode plate according to another embodiment of this application;
FIG. 10 is a left view of FIG. 9; and
FIG. 11 is a schematic structural diagram of an electrode plate according to another embodiment of this application.

Description of numeral references in the figure:
vehicle 1, battery 2, battery cell 3;
controller 11, motor 12, box 20, electrode assembly 31, housing 32, electrode terminal 33, connecting component 34, pressure relief mechanism 35, current collector 36, protective layer 38;
first box portion 201, second box portion 202, accommodating space 203, electrode plate 311, shell 321, end cover 322, positive electrode terminal 331, negative electrode terminal 332, first region 361, second region 362, tab 363, spacing 364;
active substance layer 3611, main body region 3612, thinned region 3613, first direction X, and second direction Y.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

In this application, a battery cell may include a lithium-ion secondary battery, a sodium metal battery, a magnesium metal battery, or the like. This is not limited in the embodiments of this application. The battery cell may be cylindrical, flat, or another shape. This is not limited in the embodiments of this application either. Battery cells are typically divided into three types by packaging method: cylindrical battery cell, prismatic battery cell, and pouch battery cell. This is not limited in the embodiments of this application either. For ease of description, a lithium metal battery is used as example for description of the following embodiments.

The battery mentioned in the embodiments of this application is a single physical module that includes one or more battery cells for providing higher voltage and capacity. For example, the battery mentioned in this application may include a battery module, a battery pack, or the like. A battery typically includes a box configured to enclose one or more battery cells. The box can prevent liquids or other foreign matter from affecting charge or discharge of the battery cell.

In the existing batteries, the current collector is typically made of metal copper or aluminum. As the tab is die-cut, burrs are inevitably generated when the current collector made of metal is cut. The burrs generated are likely to pierce the separator during the subsequent battery assembly process or during battery use, causing a short circuit and thus affecting the safety performance of the battery. In the prior art, the die-cutting or cutting burrs are reduced by thinning the current collector and combining it with an insulating material, the generation of burrs still cannot be avoided.

To resolve the above problems, embodiments of this application provide a technical solution. A protective layer is provided on a non-tab portion of a current collector, and the protective layer at least covers an edge of the non-tab portion close to a tab and exceeds this edge. This can effectively prevent the generation and exposure of burrs, thereby improving the safety performance of the battery.

The electrode plate described in the embodiments of this application may be a positive electrode plate or a negative electrode plate. The electrode plate described in the embodiments of this application is applicable to an electrode assembly, a battery cell, a battery, and an electric device using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

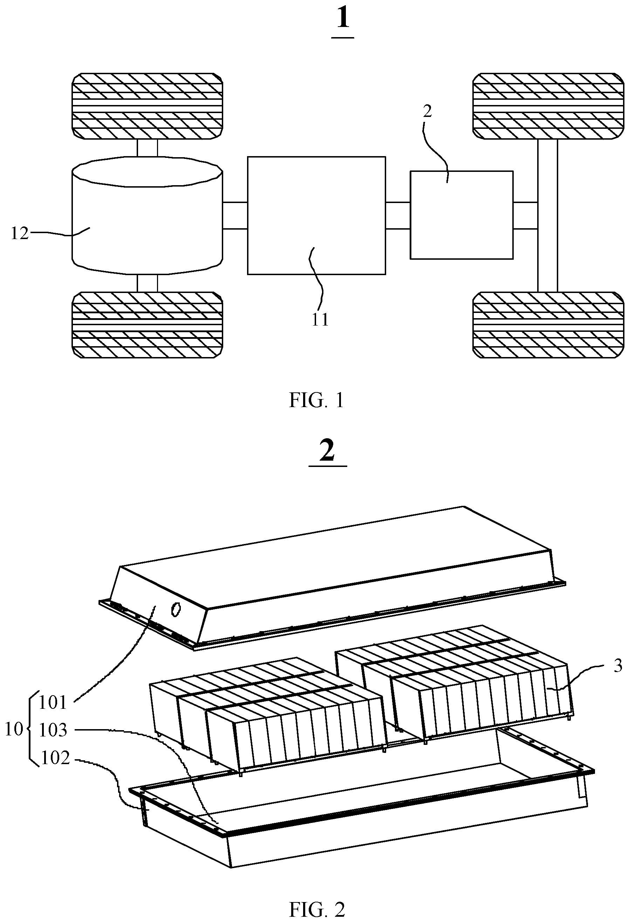

FIG. 1 is a schematic structural diagram of a vehicle 1 according to some embodiments of this application. As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power supply for the vehicle 1.

The vehicle 1 may further include a controller 11 and a motor 12, where the controller 11 is configured to control the battery 2 to supply power to the motor 12, for example, to satisfy operating power needs during start, navigation, and traveling of the vehicle 1.

In some embodiments of this application, the battery 2 can be used as not only an operational power source for the vehicle 1 but also a traction power source for the vehicle 1, replacing or partially replacing fossil fuel or natural gas to provide driving traction for the vehicle 1.

FIG. 2 is a schematic exploded view of the battery 2 according to an embodiment of this application. As shown in FIG. 2, the battery 2 includes a box 20 and battery cells 3, where the battery cells 3 are accommodated in the box 20.

The box 20 is configured to accommodate the battery cell 3. The box 20 may be of various structures. In some embodiments, the box 20 may include a first box portion 201 and a second box portion 202. The first box portion 201 and the second box portion 202 fit together to jointly define an accommodating space 203 for accommodating the battery cell 3. The second box portion 202 may be a hollow structure with an opening formed at an end, the first box portion 201 is a plate-shaped structure, and the first box portion 201 covers the opening side of the second box portion 202 so as to form the box 20 having the accommodating space 203. Alternatively, both the first box portion 201 and the second box portion 202 may be a hollow structure with an opening formed at an end, and the opening side of the first box portion 201 is engaged with the opening side of the second box portion 202 so as to form the box 20 having the accommodating space 203. Certainly, the first box portion 201 and the second box portion 202 may be in various shapes, such as cylinder or cuboid.

In order to improve the airtightness after the connection of the first box portion 201 and the second box portion 202, a sealing element such as sealing gum and sealing ring may also be disposed between the first box portion 201 and the second box portion 202.

Assuming that the first box portion 201 fits on the top of the second box portion 202, the first box portion 201 may also be referred to as an upper box cover, and the second box portion 202 may also be referred to as a lower box.

In the battery 2, multiple battery cells 3 are provided. Multiple battery cells 3 may be connected in series, parallel, or series-parallel, where being connected in series-parallel means a combination of series and parallel connections of the multiple battery cells 3. Multiple battery cells 3 may be directly connected in series, parallel, or series-parallel, and then an entirety of the multiple battery cells 3 is accommodated in the box 20. Certainly, the multiple battery cells 3 may first be connected in series, parallel, or series-parallel to constitute a battery module (not shown in the figure), and then multiple battery modules are connected in series, parallel, or series-parallel to form an entirety which is accommodated in the box 20. The multiple battery cells 3 in the battery module may be electrically connected via a busbar, so that the multiple battery cells 3 in the battery module are connected in series, parallel, or series-parallel.

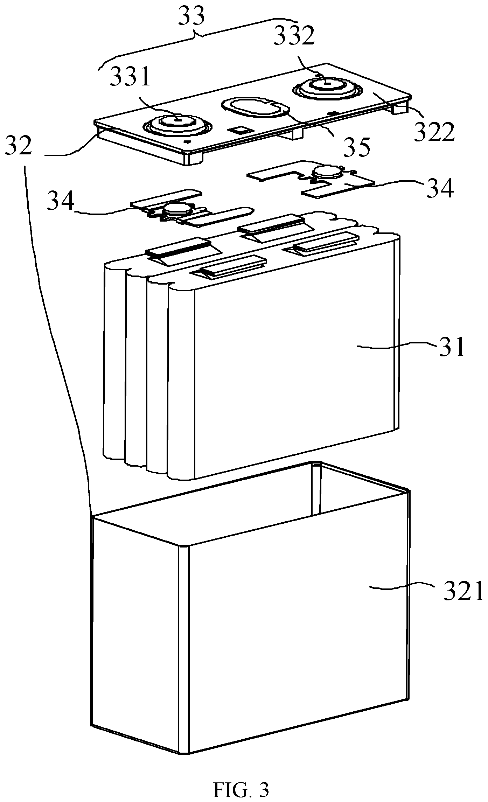

FIG. 3 is a schematic structural diagram of a battery cell 3 according to an embodiment of this application. The battery cell 3 includes one or more electrode assemblies 31, a shell 321, and an end cover 322. The shell 321 and the end cover 322 form a housing or battery box 32. Walls of the shell 321 and the end cover 322 are referred to as walls of the battery cell 3. As a cuboid battery cell 3, the walls of the shell 321 include a bottom wall and four side walls. The shell 321 is determined depending on a shape of a combination of the one or more electrode assemblies 31. For example, the shell 321 may be a hollow cuboid, cube, or cylinder, and one face of the shell 321 has an opening such that the one or more electrode assemblies 31 can be put into the shell 321. For example, when the shell 321 is a hollow cuboid or cube, one plane of the shell 321 is an opening surface, which means that the plane has no wall so that the inside and the outside of the shell 321 are communicated. When the shell 321 is a hollow cylinder, an end surface of the shell 321 is an opening surface, which means that the end surface has no wall so that the inside and the outside of the shell 321 are communicated. The end cover 322 covers the opening and joins the shell 321 to form an enclosed cavity for accommodating the electrode assembly 31. The shell 321 is filled with an electrolyte such as a liquid electrolyte.

The battery cell 3 may also include two electrode terminals 33 that may be disposed on the end cover 322. The end cover 322 is typically a flat plate, and the two electrode terminals 33 are fastened on a flat surface of the end cover 322. The two electrode terminals 33 are a positive electrode terminal 331 and a negative electrode terminal 332. Each of the electrode terminals 33 is correspondingly provided with a connecting component 34, which may alternatively be referred to as a current collection component 34. The current connection component 34 is located between the end cover 322 and the electrode assembly 31 and is configured to electrically connect the electrode assembly 31 and the electrode terminals 33.

In the battery cell 3, one or more electrode assemblies 31 may be provided according to actual use requirements. As shown in FIG. 3, the battery cell 3 is provided with four independent electrode assemblies 31.

The battery cell 3 may be further provided with a pressure relief mechanism 35. The pressure relief mechanism 35 is configured to be actuated when internal pressure or temperature of the battery cell 3 reaches a threshold, so as to relieve the internal pressure or temperature.

The pressure relief mechanism 35 may be of various possible pressure relief structures. This is not limited in the embodiments of this application. For example, the pressure relief mechanism 35 may be a temperature-sensitive pressure relief mechanism configured to melt when the internal temperature of the battery cell 3 provided with the pressure relief mechanism 35 reaches the threshold; and/or the pressure relief mechanism 35 may be a pressure-sensitive pressure relief mechanism configured to break when the internal pressure of the battery cell 3 provided with the pressure relief mechanism 35 reaches the threshold.

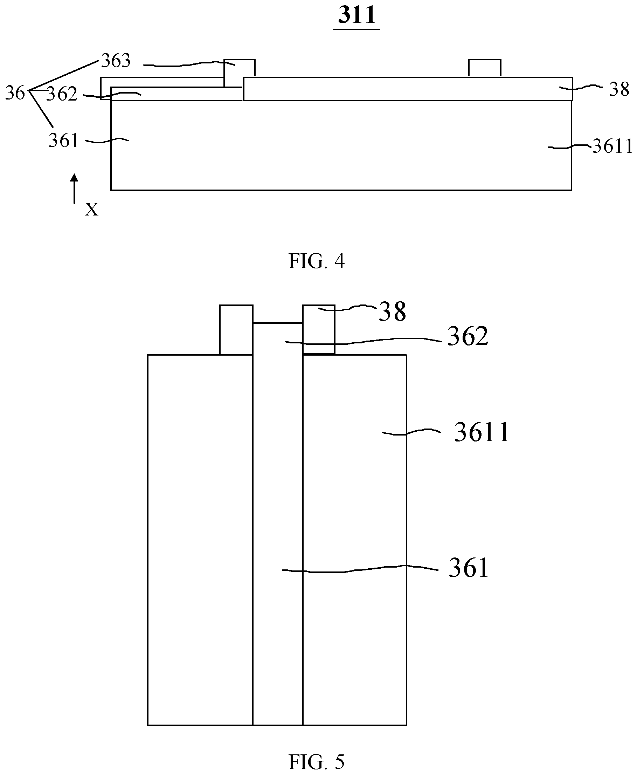

FIG. 4 is a schematic structural diagram of an electrode plate according to an embodiment of this application. The electrode plate 311 includes a current collector 36, where the current collector 36 includes a first region 361, a second region 362, and a tab 363 that are arranged sequentially in a first direction X, the first region 361 is coated with an active substance layer 3611, and the second region 362 is uncoated with the active substance layer 3611; and a protective layer 38, where the protective layer 38 at least partially covers an edge of the second region 362 close to the tab 363 and exceeds the edge of the second region 362 close to the tab 363 in the first direction X.

In the embodiments of this application, the current collector 36 refers to the component that collects current. In the battery 2, the current collector mainly refers to a metal foil, such as a copper foil or an aluminum foil. The function of the current collector 36 is to collect the newly generated current from the active substance of the battery 2 to form a large current for external output. Therefore, a metal material with as low internal resistance as possible is typically used as the current collector 36.

In the embodiments of this application, the active substance layer 3611 refers to a substance that can participate in the current-forming reaction in the battery 2. The current-forming reaction is an oxidation and reduction reaction. The oxidation reaction refers to the chemical reaction of losing electrons; the reduction reaction refers to the chemical reaction of gaining electrons The active substance layer 3611 participates in the current-forming reaction. Specifically, while the active substance on one electrode loses electrons, the active substance on the other electrode gains electrons. In the process of losing and gaining electrons, electrons flow to form a current.

In the above solution, the current collector 36 includes the first region 361 coated with an active substance, the second region 362 uncoated with the active substance, and the tab 363. The protective layer 38 is provided in the second region 362 uncoated with the active substance, where the protective layer 38 at least covers the edge of the second region 362 and exceeds the edge. As the protective layer 38 is provided to cover and exceed the edge of the second region 362 close to the tab 363, action can be made on the protective layer 38 when the current collector 36 is processed, thereby avoiding the generation of burrs. Or the burrs on the edge of the current collector 36 are covered directly, avoiding exposure of the burrs, and preventing the burrs from piercing the separator and thus causing a short circuit in the battery 2, thereby improving the safety performance of the battery 2.

Optionally, the protective layer 38 covers a partial region of the tab 363.

In the embodiments of this application, burrs refer to the debris and extremely fine fibers that appear on the surface of the current collector 38 made of a metal material. The more burrs there are, the greater the risk of the separator being pierced, and the lower the safety factor of the battery 2.

In the above solution, the direction of the burrs in the second region 362 of the current collector 36 is uncertain. To comprehensively avoid exposure of the burrs, the protective layer 38 must exceed the edge of the second region 362 close to the tab 363. Since the second region 362 and the tab 363 are connected, exceeding the edge of the second region 362 close to the tab 363 means the protective layer 38 certainly covers part of the tab 363 but cannot cover the entire tab 363. The protective layer 38 is limited to cover a partial region of the tab 363, meaning that the protective layer 38 does not cover the entire tab 363. This ensures the safety of the battery 2 and the normal current-carrying capacity and welding capability of the tab 363, thereby ensuring the normal function of the battery 2.

FIG. 5 is a left view of FIG. 4. As shown in FIG. 5, the protective layer 38 completely covers the second region 362.

In the embodiments of this application, the current collector 36 is formed by the first region 361, the second region 362, and the tab 363. The first region 361 is coated with the active substance layer 3611, and the second region 362 is uncoated with the active substance layer 3611. The protective layer 38 is disposed in the second region 362 uncoated with the active substance layer 3611. The protective layer 38 at least covers the edge of the second region 362 close to the tab 363, meaning that the protective layer 38 can cover part of the second region 362 or the entire second region 362.

In the above solution, the protective layer 38 covering the entire second region 362 can improve the protective effect of avoiding generation or exposure of the burrs, further improving the protective effect of the protective layer 38 on the safety performance of battery 2.

Optionally, the protective layer 38 adjoins the active substance layer 3611 at the joint between the first region 361 and the second region 362.

The first region 361 and the second region 362 of the current collector 36 are connected. The second region 362 is entirely covered by the protective layer 38, and the first region 361 is entirely coated with the active substance layer 3611. In other words, the protective layer 361 and the active substance layer 3611 adjoin but do not intersect.

In the above solution, the protective layer 38 and the active substance layer 3611 are enabled to adjoin at the joint between the first region 361 and the second region 362, ensuring that the protective layer 361 completely covers the second region 362 without occupying the area of the first region 361 coated with the active substance layer 3611.

Optionally, the protective layer 38 is of a non-porous structure.

To comprehensively prevent the generation and exposure of burrs, the protective layer 38 completely covers the second region 361 and exceeds the edge of the second region 362 close to the tab 363. The second region 362 is uncoated with the active substance layer 3611, and thus the protective layer 38 in the second region 362 is not subjected to ion or electron migration.

In the above solution, the structure of the protective layer 38 completely covering the second region 362 and exceeding the edge of the second region 362 close to the tab 363 is arranged as a non-porous structure, enhancing the sealing and protective effect of the protective layer 38.

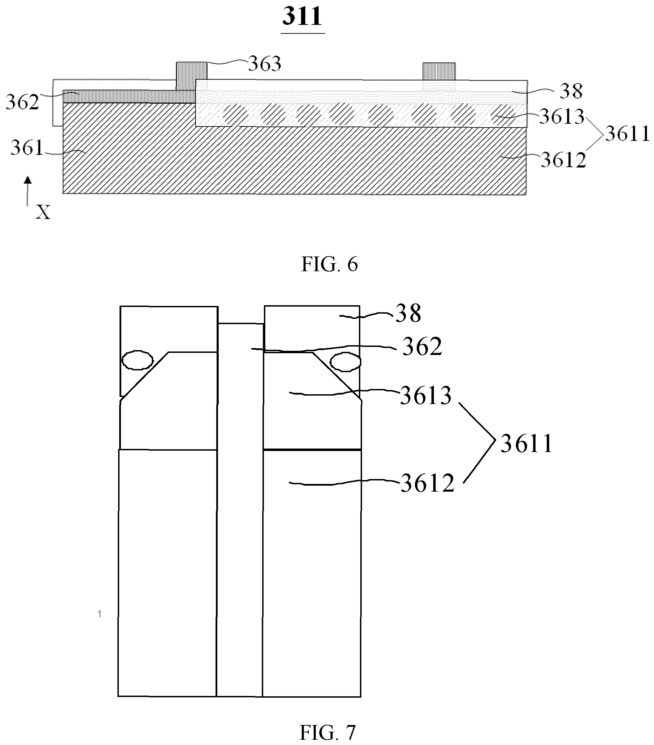

FIG. 6 is a schematic structural diagram of an electrode plate according to another embodiment of this application, and FIG. 7 is a left view of FIG. 6. As shown in FIGs 6 and 7, the active substance layer 3611 includes a main body region 3612 and a thinned region 3613 arranged in the first direction X, a thickness of the thinned region 3613 is less than a thickness of the main body region 3612, and the protective layer 38 also covers the thinned region 3613.

In the embodiments of this application, during the processing of the electrode plate 311, the edge of the active substance layer 3611 is thinned to produce the thinned region 3613. The thinned region 3613 can avoid issues such as a thick edge and a bulge at the edge of the active material layer 3611 applied to the current collector 36.

In the above solution, arranging the thinned region 3613 on the active substance layer 3611 can avoid issues such as a thick edge and a bulge of the active substance layer 3611, thereby improving the quality of the electrode plate 311. In addition, during actual processing, it is difficult to make the protective layer 38 adjoin the active substance layer 3611 precisely at the joint between the first region 361 and the second region 362. The protective layer 38 partially or entirely covers the thinned region 3613, that is, the protective layer 38 partially overlaps the active substance layer 3611, which can reduce the processing difficulty of the protective layer 38 arranged during production.

Optionally, the size of the thinned region 3613 does not exceed 10 mm.

To avoid the issues of the electrode plate 311 such as a thick edge and a bulging edge, a thinned region 3613 is provided at a side edge of the first region 361 close to the second region 362, where the active substance layer 3611 is thinned. If the thinned region 3613 is too long, that is, the overall mass of the active substance is reduced, the energy density of the battery 2 is reduced.

In the embodiments of this application, the energy density of the battery 2 refers to a mass or volume ratio of the energy that can be charged into a given electrochemical energy storage apparatus to an energy storage medium. The mass ratio of the charged energy to the energy storage medium is the mass energy density in the unit of watt-hours per kilogram (Wh/kg). The volume ratio of the charged energy to the energy storage medium is the volume energy density in the unit of watt-hours per liter (Wh/L), with the energy storage medium being the active substance.

In the above solution, in the first direction X, the size of the thinned region 3613 does not exceed 10 mm, ensuring that the thinned region 3613 can prevent issues such as a thick edge and a bulging edge of the electrode plate 311, without reducing the energy density of the battery 2.

Optionally, the protective layer 38 covering the thinned region 3613 is of a micro-porous structure.

The micro-pore refers to a pore on the protective layer 38 covering the thinned region 3613. In the embodiments of this application, the micro-pore is a pore with a diameter of less than 2 nm, that is, there are pores with a diameter of less than 2 nm on the protective layer 38 covering the thinned region 3613.

In the embodiments of this application, the thinned region 3613 is where the active substance layer 3611 is thinned, but still present. The protective layer 38 covering the thinned region 3613 is arranged to be of a micro-porous structure, ensuring the normal electrochemical reaction and the migration of metal ions and batteries in the thinned region 3613.

Optionally, the thickness of the protective layer 38 covering the thinned region 3613 does not exceed the thickness difference between the main body region 3612 and the thinned region 3613.

As mentioned earlier, if the area or thickness of the protective layer 38 is too large, the volume energy density of the battery 2 is reduced. Therefore, the protective layer 38 arranged at the thinned region 3613 should partially or completely cover the thinned region 3613 without exceeding the edge of the thinned region 3613 close to the first region 361.

In the above solution, the thickness of the protective layer 38 covering the thinned region 3613 does not exceed the thickness difference between the main body region 3612 and the thinned region 3613, meaning that the protective layer 38 covers the thinned region 3613 but does not exceed the edge of the thinned region 3613 close to the first region 361. In this way, the volume energy density of the battery is not reduced.

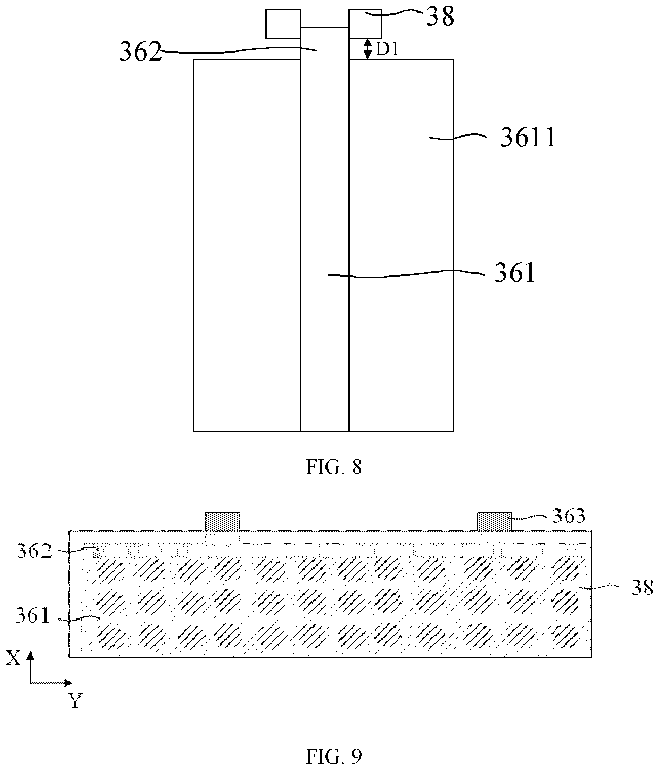

FIG. 8 is a left view of a schematic structural diagram of an electrode plate according to another embodiment of this application. As shown in FIG. 8, the ratio of the size D1 of the second region 362 not covered by the protective layer 38 to the size of the second region 362 does not exceed 1:6.

As mentioned earlier, the protective layer 38 only needs to cover the edge of the second region 362 close to the tab 363 and exceed this edge, meaning that the protective layer 38 can completely cover the second region 3612 or partially cover the second region 362. When the protective layer 38 partially covers the second region 362, the production cost of the protective layer 38 can be reduced. However, the size D1 of the second region 362 not covered by the protective layer 38 should be set properly because the second region 362 is not coated with the active substance layer 3611 nor covered by the protective layer 38 at D1, and this region is the directly exposed current collector 36. The exposed current collector 36 faces the active substance of the other electrode plate 311. If the separator wrinkles, the excessive exposure length of the current collector 36 causes this exposed part of the current collector 36 to directly come into contact with the other electrode plate, resulting in a short circuit risk. If the size D1 of the second region 362 not covered by the protective layer 38 is too large, the size of the second region 362 covered by the protective layer 38 becomes smaller, that is, the connection region between the protective layer 38 and the second region 362 is small. This leads to an insecure connection between the protective layer 38 and the current collector 36, reducing the protective effect of the protective layer 38 on the current collector 36.

In the above solution, in the first direction X, the ratio of the size D1 of the second region 362 not covered by the protective layer 38 to the size of the second region 362 is controlled within 1:6. This can reduce the production cost of the protective film 38 and enhance the connection effect between the protective layer 38 and the current collector 36.

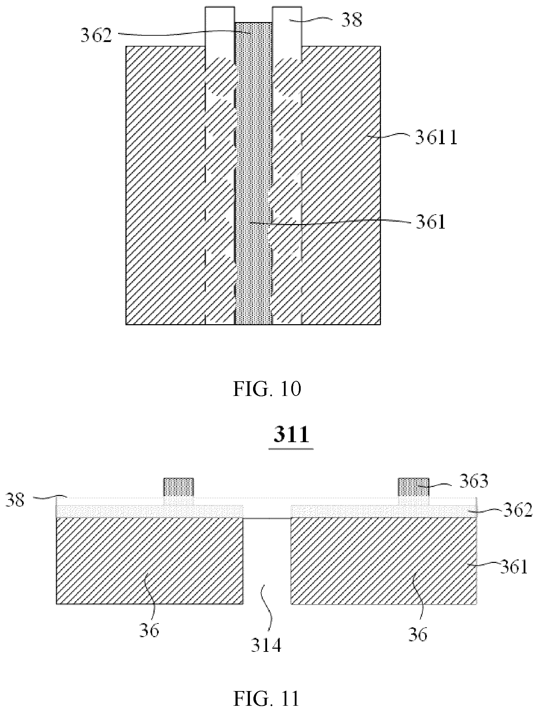

FIG. 9 is a schematic structural diagram of an electrode plate according to another embodiment of this application, and FIG. 10 is a left view of FIG. 9. As shown in FIGs. 9 and 10, optionally, the protective layer 38 also covers the first region 361.

The first region 361 is coated with the active substance layer 3611, and the second region 361 is uncoated with an active substance. An edge of the second region 361 close to the tab 363 is covered by the protective layer 38, and in the first direction X, the protective layer 38 exceeds the edge of the second region close to the tab 363. To further improve the prevention and coverage effects of the protective layer 38 on burrs on the current collector 36, the protective layer 38 may also cover the first region 361.

In the above solution, the protective layer 38 also covers the first region 361. Specifically, the protective layer 38 is arranged on both the first region 361 and the second region 362 of the current collector 36 and exceeds the edge of the second region 362 close to the tab 363. The active substance layer 3611 is applied to the protective layer 38, the protective layer 38 is directly connected to the current collector 36, and the active substance layer 3611 overlaps the first region 361 in the thickness direction.

Optionally, the protective layer 38 covering the first region 361 is of a porous structure.

The protective layer 38 is directly connected to the current collector 36 and covers the first region 361 and the second region 362 of the current collector 36. The active substance layer 3611 is applied to the protective layer 38. To ensure the normal connection between the active substance layer 3611 and the protective layer 38, the protective layer 38 covering the first region 361 needs to be arranged as a porous structure.

In the above solution, the protective layer 38 covering the first region 361 is arranged as a porous structure, such that the connection between the active substance layer 3611 and the current collector 36 is not affected, thereby ensuring the normal electrochemical reaction of the battery 2.

Optionally, the thickness of the protective layer 38 is not greater than the thickness of the active substance layer 3611.

With the same active substance, a battery 2 with a thicker protective layer 38 has a lower volume energy density than a battery 2 with a thinner protective layer 38.

In the above solution, as the thickness of the protective layer 38 is not greater than the thickness of the active substance layer 3611, the protective layer 38 can protect the safety of the battery 2 without reducing the volume energy density of the battery 2.

Optionally, in the first direction X, the size of the second region 362 is 0.5-3 mm.

The second region 362 is not coated with the active material, and the second region 362 is mainly used to be connected with the protective layer 38. In the first direction X, if the size of the second region 362 is too small, the difficulty of connecting the protective layer 38 to the second region 362 increases. If the size of the second region 362 is too large, the second region 362 occupies too much area of the current collector 36, decreasing the energy density of the battery 2.

In the above solution, maintaining the size of the second region 362 in the first direction X within 0.5-3 mm can improve the connection between the protective layer 38 and the current collector 36 without occupying much of the active substance region.

Optionally, as shown in FIG. 9, in the second direction Y, the current collector 36, the active substance layer 3611, and the protective layer 38 have the same size, and the second direction Y is perpendicular to the first direction X.

In the actual processing of the electrode plate 311, a part of the current collector 36 is die-cut along an edge of the current collector 36. In the embodiments of this application, the die-cutting is performed along the edge of the second region 362 close to the tab 363, and the die-cutting region may be a wide tab region where only the tab 363 is die-cut, and the other region of the current collector 36 connected to the die-cutting region does not need to be die-cut. Before the die-cutting, the protective layer 38 is arranged in the second region 362 of the current collector 36. When a non-tab region is die-cut, the die-cutting is performed on the protective layer 38 that does not cover the current collector 36. When the tab 363 is die-cut, the die-cutting is performed on the current collector 36 covered by the protective layer 38. This can prevent burrs from being generated or exposed due to die-cutting, thereby improving the safety performance of the battery 2. To further improve the protective effect of the protective layer 38 on the battery 2, the regions of the current collector 36 that need to be die-cut should be provided with the protective layer 38.

In other words, the time for arranging the protective layer 38 during the processing of the electrode plate 311 is not particularly limited in this application. The protective layer 38 may be arranged before the current collector 36 is die-cut, such that action is directly made on the protective layer 36 during die-cutting of the current collector 36. Alternatively, the protective layer 38 may be arranged after the current collector 36 is die-cut. This can be changed based on the production needs in the actual production process.

In the above solution, the protective layer 38 at least covers the edge of the second region 362 close to the tab 363 and exceeds this edge in the first direction X. In the second direction Y, as the current collector 36, the active substance layer 3611, and the protective layer 38 have the same size, the protective layer 38 can completely cover the burrs on the current collector 36, thereby improving the protective effect on the safety performance of the battery 2.

FIG. 11 is a schematic structural diagram of an electrode plate according to another embodiment of this application. As shown in FIG. 11, optionally, in a second direction Y, multiple such current collectors 36 are spaced apart, the protective layer 38 is continuous in the second direction Y, a size of the protective layer 38 in the second direction Y is the same as a sum of sizes of the multiple current collectors 36 and sizes of spacings 364 between the multiple current collectors 36, and the second direction Y is perpendicular to the first direction X.

When the multiple current collectors 36 are spaced apart to form the electrode plate 311 of the battery cell 3, the protective layer 38 is continuously distributed in the electrode plate 311. In other words, the protective layer 38 covers not only the edges of the second regions 362 of different current collectors 36 close to the tab 363, but also the spacings 364 between the multiple current collectors 36. A place where no current collector 36 is arranged, that is, the spacing 364 where no active substance layer 3611 is arranged, may be used as the cutting place of the electrode plate 311 of the battery cell 3 stacked. This can avoid generation of burrs during edge cutting. This place may alternatively be used as the corner of the battery cell 3 wound, thereby avoiding powder falling off at the corner and producing particles that destroy the safety of the battery cell 3, or avoiding the risk of lithium precipitation at the corner.

In the above solution, in the second direction Y, as the size of the protective layer 38 is the same as a sum of sizes of all the current collectors 36 and sizes of spacings 341 between all the current collectors 36, the protective layer 38 can completely cover the burrs on the current collectors 36, thereby improving the safety performance of the battery 2.

Optionally, the active substance layer 3611 and the protective layer 38 are arranged on two opposite surfaces of the current collector 36.

In the above solution, arranging the active substance layer 3611 on two opposite surfaces of the current collector 36 can increase the energy density of the battery 2; arranging the protective layer 38 on two opposite surfaces of the current collector 36 can further improve the safety performance of the battery 2.

Optionally, the protective layer 38 and the current collector 36 are connected through adhesion or thermal bonding.

In the above solution, the protective layer 38 and the current collector 36 are connected through adhesion or thermal bonding, which is a simple connection method and can be widely applied in the production process.

Optionally, a material of the protective layer 38 is polypropylene, polyamide, or epoxy resin.

Polypropylene is formed by the polymerization reaction of propylene and is a polymer of a thermoplastic synthetic resin with good performance. In the embodiments of this application, the protective layer 38 prepared using polypropylene as a raw material can resist corrosion by various organic solvents and has chemical resistance, heat resistance, electrical insulation, high-strength mechanical performance, and good wear-resistance processing performance. Similarly, the protective layer 38 prepared using polyamide or epoxy resin as a raw material also has good performance. In addition, the prices of the three are appropriate, which is conducive to application in large-scale production.

In the above solution, the protective layer 38 is made of polypropylene, polyamide, or epoxy resin, ensuring the normal protection of the protective layer 38 for the battery 2, reducing the production cost, and facilitating application in large-scale production.

The embodiments of this application further provide an electrode assembly 31, including the electrode plate 311 in the foregoing embodiments.

The embodiments of this application further provide a battery cell 3, including the battery assembly 31 in the above embodiments; a shell 321 provided with an opening and configured to accommodate the electrode assembly 31; and an end cover 322 configured to close the opening.

The embodiments of this application further provide a battery 2 including the battery cell 3 in the foregoing embodiments.

The embodiments of this application further provide an electric device, including the battery 2 in the foregoing embodiments, where the battery 2 is configured to supply electrical energy.

### Comparative example 1

Comparative example 1: A positive electrode plate is provided, where two opposite surfaces of a current collector are each coated with an active substance layer, and except a tab after die-cutting, the current collector is retained with a die-cut edge of 1.5 mm.

### Example 1

Example 1: A positive electrode plate is provided, where an active substance layer and a protective layer are arranged on two opposite surfaces of a current collector. Except for a tab, a 1.5 mm wide region retained at a die-cut edge of a second region is covered by the protective layer, the protective layer extends beyond by 1.5 mm an edge of the second region close to the tab, and the protective layer and the active substance layer on the same side have the same thickness.

### Example 2

Example 2: A positive electrode plate is provided, where an active substance layer and a protective layer are arranged on two opposite surfaces of a current collector. Except for a tab, a 1.5 mm wide region retained at a die-cut edge of a second region is covered by the protective layer, the protective layer extends beyond by 1.5 mm an edge of the second region close to the tab, a 5 mm thinned region is also covered by the protective layer, and the protective layer and the active substance layer on the same side have the same thickness.

### Example 3

Example 3: A positive electrode plate is provided, where an active substance layer and a protective layer are arranged on two opposite surfaces of a current collector. Except for a tab, the remaining current collector is covered by the protective layer, a local porous region of the protective layer is covered by an active substance, the protective layer extends beyond by 1.5 mm an edge of the second region close to the tab, and the protective layer and the active substance layer on the same side have the same thickness.

### Hi-pot test

The positive electrode plates, negative electrode plates, and separators in the above Comparative example and examples were separately assembled into batteries. These batteries were designed with the following structure: the edge in width of the active substance layer of the negative electrode plate was higher than the die-cut edge of the corresponding positive electrode current collector. At 25°C, these batteries were subjected to a Hi-pot test to detect whether there are burrs that pierce the separator and cause battery fire. The test results are shown in Table 1.

**Table 1**

| Group | Probability of burrs piercing separator | Probability of fire failure |
|---|---|---|
| Comparative example 1 | 75% | 98% |
| Example 1 | 1% | 1% |
| Example 2 | 1% | 1% |
| Example 3 | 1% | 1% |

From the above battery performance test results, it can be seen that the electrode plates provided by the embodiments of this application can effectively reduce the probability of burrs piercing separator and the probability of battery fire, thereby improving the safety performance of the battery.

Although this application has been described with reference to the preferred embodiments, various modifications to this application and replacements of the components therein with equivalents can be made without departing from the scope of this application. In particular, as long as there is no structural conflict, the various technical features mentioned in the implementations can be combined in any manner. This application is not limited to the specific embodiments disclosed in this specification but includes all technical solutions falling within the scope of the claims.

## Claims

1. An electrode plate (311), **characterized by** comprising:
a current collector (36), wherein the current collector (36) comprises a first region (361), a second region (362), and a tab (363) that are arranged sequentially in a first direction (X), the first region (361) is coated with an active substance layer (3611), and the second region (362) is uncoated with the active substance layer (3611); and
a protective layer (38), wherein the protective layer (38) at least partially covers an edge of the second region (362) close to the tab (363) and exceeds the edge of the second region (362) close to the tab (363) in the first direction (X).

2. The electrode plate (311) according to claim 1, **characterized in that** the protective layer (38) covers a partial region of the tab (363).

3. The electrode plate (311) according to claim 1 or 2, **characterized in that** the protective layer (38) completely covers the second region (362).

4. The electrode plate (311) according to claim 3, **characterized in that** the protective layer (38) adjoins, at a joint with the first region (361) and the second region (362), the active substance layer (3611).

5. The electrode plate (311) according to claim 3 or 4, **characterized in that** the protective layer (38) is a non-porous structure.

6. The electrode plate (311) according to claim 1 or 2, **characterized in that** the active substance layer (3611) comprises a main body region (3612) and a thinned region (3613) arranged in the first direction (X), a thickness of the thinned region (3613) is less than a thickness of the main body region (3612), and the protective layer (38) also covers the thinned region (3613).

7. The electrode plate (311) according to claim 6, **characterized in that** in the first direction (X), a size of the thinned region (3613) is no more than 10 mm.

8. The electrode plate (311) according to claim 6 or 7, **characterized in that** the protective layer (38) covering the thinned region (3613) is of a micro-porous structure.

9. The electrode plate (311) according to any one of claims 6 to 8, **characterized in that** a thickness of the protective layer (38) covering the thinned region (3613) does not exceed a thickness difference between the main body region (3612) and the thinned region (3613).

10. The electrode plate (311) according to claim 1 or 2, **characterized in that** in the first direction (X), a ratio of a size of the second region (362) not covered by the protective layer (38) to a size of the second region (362) does not exceed 1:6.

11. The electrode plate (311) according to claim 3, **characterized in that** the protective layer (38) also covers the first region (361).

12. The electrode plate (311) according to claim 11, **characterized in that** the protective layer (38) covering the first region (361) is of a porous structure.

13. The electrode plate (311) according to any one of claims 1 to 12, **characterized in that** a thickness of the protective layer (38) is not greater than a thickness of the active substance layer (3611).

14. The electrode plate (311) according to any one of claims 1 to 13, **characterized in that** in the first direction (X), the size of the second region (362) is 0.5-3 mm.

15. The electrode plate (311) according to any one of claims 1 to 14, **characterized in that** in the first direction (X), the protective layer (38) exceeds the edge of the second region (362) close to the tab (363) by 0.5-10 mm.

16. The electrode plate (311) according to any one of claims 1 to 15, **characterized in that** the current collector (36), the active substance layer (3611), and the protective layer (38) have a same size in a second direction (Y), and the second direction (Y) is perpendicular to the first direction (X).

17. The electrode plate (311) according to any one of claims 1 to 15, **characterized in that** in a second direction (Y), multiple such current collectors (36) are spaced apart, the protective layer (38) is continuous in the second direction (Y), a size of the protective layer (38) in the second direction (Y) is the same as a sum of sizes of the multiple current collectors (36) and sizes of spacings (364) between the multiple current collectors (36), and the second direction (Y) is perpendicular to the first direction (X).

18. The electrode plate (311) according to any one of claims 1 to 17, **characterized in that** the active substance layer (3611) and the protective layer (38) are disposed on two opposite surfaces of the current collector (36).

19. The electrode plate (311) according to any one of claims 1 to 18, **characterized in that** the protective layer (38) and the current collector (36) are connected through adhesion or thermal bonding.

20. The electrode plate (311) according to any one of claims 1 to 19, **characterized in that** a material of the protective layer (38) is polypropylene, polyamide, or epoxy resin.

21. An electrode assembly (31), **characterized by** comprising:
the electrode plate (311) according to any one of claims 1 to 20.

22. A battery cell (3), **characterized by** comprising:
the electrode assembly (31) according to claim 21;
a shell (321) provided with an opening and used for accommodating the electrode assembly (31); and
an end cover (322) configured to close the opening.

23. A battery (2), **characterized by** comprising:
multiple such battery cells (3) according to claim 22.

24. An electric device, **characterized by** comprising:
the battery (2) according to claim 23, wherein the battery (2) is configured to supply electrical energy.
